# EUROPEAN PATENT APPLICATION

(11) **EP 4 796 491 A2**
(43) Date of publication of application: **26.08.2026**
(21) Application number: 26191248.9
(22) Date of filing: 09.09.2024
(51) Int. Cl.: B66F 9/24

(54) **LOAD SCANNING**

(30) Priority: 09.09.2023 GB 202313769
(62) Document number(s) of the earlier application(s) in accordance with Art. 76 EPC: 24768533.2 / 4 774 225
(71) Applicant: Combilift, Annahagh H18 VP65, Co. Monaghan (IE)
(72) Inventor: MCVICAR, Martin, Monaghan (IE); MOFFETT, Robert, Monaghan (IE); COLEMAN, Joe, Monaghan (IE)
(74) Representative: FRKelly

(57) **Abstract**

Autonomous vehicle unload-location scanning is disclosed. An unloading task specifying a racking-system unload location and a required volume, including load volume and clearances, is received by the vehicle. A light-based scanning device scans a predefined space at the unload location and scan data are processed to determine unoccupied volumetric space. If the available space is less than the required volume, the unloading task is terminated and a report can be sent to warehouse management software. Optional embodiments move the scanner under or over the carried load, use multiple scanners whose data are merged into a point cloud, and adjust a virtual unload envelope to match different loads and racking configurations.

## Description

### Technical Field

This invention relates to a system and method that scans a load present at a location prior to lifting of the load.

### Background Art

Automated forklifts have become a crucial part of modern warehousing and logistics operations. Working safely alongside humans, these robot helpers can take over the heavy lifting, leaving people to focus on more complex tasks. An autonomous forklift is a forklift which is commanded to carry out task by a commanding software system such as a warehouse management software (WMS) or graphical user interface (GUI) software. The forklift itself is capable of navigating, driving and is fitted with safety systems that ensure it will stop for pedestrians or obstacles in its path. These machines can work around the clock, reducing downtime and increasing the amount of work that can be accomplished in any given period of time.

When accepting commands from a commanding software system, one option is to blindly trust that the warehouse is correctly configured with the correct load sizes and clearances everywhere. It could be assumed the commanding software system always has perfect knowledge of the state of the warehouse and where all loads are. It could further be assumed that no operator error occurs in the loading of materials into containers or in the positioning of loads onto racks.

Several key safety concerns arise from these assumptions, for example:
- Commanding software system commands a load to be set down where there is already a load.
- Operator error results in neighbouring loads touching each other which means that removing one of these is now a very delicate task unsuited for automated operation.
- Operator error results in an overfull load container such that there is insufficient clearance above a load before the next set of rack arms.
- Operator error places a load incorrectly such that it is no longer centred on the forklift
- Navigation system error results in the forklift incorrectly aligning with a load such that it is not in the centre of the load.

To safely handle loads there is a need to develop vehicle systems and algorithms that replace the perception functions performed by the driver on a manned forklift.

CN115826576A discloses an intelligent control system and method for self-loading and unloading an automatic forklift robot. Further, it comprises a laser scanner and depth camera used for obtaining load or object features like height, width, central coordinates, etc. The scanned data from the depth camera is used to generate the 3D point cloud of the load. Further acquired information is matched with a pre-stored template. Features like height and width are obtained. During the unloading process, the system receives information from a control center (inferential to the warehouse management system), and the forklift robot acts according to the information received.

JP2021138485A discloses an autonomous forklift system. The autonomous forklift includes a 2D laser sensor. The scanned data from the laser sensor is used to generate the 3D point cloud of the load. The scanned data is used to obtain various parameters related to the load, such as load height, width, length, clearance, gap above the load, etc. the forklift is in communication with the luggage information storage unit for receiving information related to the loading and unloading.

DE102020006337A1 discloses autonomous industrial trucks (AFF). A RADAR or LIDAR sensor mounted on the AFF for scanning the load at a location. The scanned data is processed to obtain a depth image of the load and the surrounding environment. Using the scanned data to calculate the load's height. The AFF is in communication with the management system to complete a task.

These prior art teachings are deficient with respect to determining the properties of a load. There is therefore a need for improved load scanning which addresses at least some of the drawbacks of the prior art.

### Summary of the Invention

In a first independent aspect of the present teachings, there is provided a method for an autonomous vehicle to scan a load at a location comprising receiving a lifting task including the location of the load on a racking system, scanning a predefined space at the location with a light based scanning device mounted on the autonomous vehicle, processing data acquired from the scan to determine a distance between each end of the load, perpendicular to the autonomous vehicle, and a neighbouring load in the racking system, and terminating the lifting task if it is determined that the distance is less than a predetermined distance.

The capability to measure the distance to a neighbouring load ensures that when the load is lifted it will not contact the neighbouring load, which could cause an accident such as the load to be lifting falling or the neighbouring load falling.

Receiving the lifting task may include receiving the predetermined distance for the load. Each load may have a different predetermined distance which is most appropriate for the type of load. For example, stack s of rebar (reinforcing bar) can often have a bar protruding at the end and will require more clearance than other load such as a unitary item.

Optionally, the method further comprises processing the data to determine the length of the load and terminating the lifting task if it is determined that the length exceeds a predetermined length. This can indicate that the load at the location is not the correct load and could have been placed there incorrectly.

Receiving the lifting task may include receiving the predetermined length for the load.

The method may further comprise processing the data acquired from the scan to determine the unoccupied volumetric space between each end of the load, perpendicular to the autonomous vehicle, and a neighbouring load in the racking system. While the distance to a neighbouring load may be sufficient for some load types it is sometimes necessary to obtain the volumetric space to ensure that the area between the load to be lifted and the neighbouring load is completely clear.

Optionally, the method further comprises terminating the lifting task if it is determined that the unoccupied volumetric space is less than a predetermined unoccupied volumetric space.

The method may further comprise processing the data acquired from the scan to determine a clearance available above the load.

The method may further comprise processing the data acquired from the scan to determine a clearance available below the load.

Optionally, the method further comprises terminating the lifting task if it is determined that the clearance is less than a predetermined clearance.

Terminating the lifting task may comprise sending a report from the autonomous vehicle to a commanding software system identifying the reason for terminating the lifting task.

The method may further comprise processing the data acquired from the scan to determine the presence or absence of a load face, and if present, the distance to the load face.

In a second independent aspect of the present teachings, there is provided a system for scanning a load at a location comprising a commanding software system and an autonomous vehicle, the commanding software system configured to send a lifting task including the location of the load on a racking system to the autonomous vehicle, and the autonomous vehicle configured to scan a predefined space at the location with a light based scanning device mounted on the autonomous vehicle, processes data acquired from the scan to determine a distance between each end of the load, perpendicular to the autonomous vehicle, and a neighbouring load in the racking system, and terminate the lifting task if it is determined that the distance is less than a predetermined distance.

The autonomous vehicle may be further configured to send a report from the autonomous vehicle to the commanding software system identifying the reason for terminating the lifting task.

The commanding software system may be further configured to provide the predetermined distance in the report sent to the autonomous vehicle.

In a third independent aspect of the present teachings, there is provided an autonomous vehicle configured to perform the previously described method.

In a fourth independent aspect of the present teachings, there is provided a method for an autonomous vehicle to scan an unload location comprising receiving an unloading task including the unload location on a racking system, scanning a predefined space at the unload location with a light based scanning device mounted on the autonomous vehicle, processing data acquired from the scan to determine whether a required volume to unload the load is available at the unload location, and terminating the unloading task if it is determined that the available volume at the unload location is less than the required volume.

This method ensures that the load is not unloaded at unsuitable location, which could cause an accident such as the load falling after unloading or the neighbouring load falling upon contact with the load being unloaded.

Preferably, the required volume includes the volume of the load and predefined clearances around the load.

Receiving the unloading task may include receiving the required volume for the load.

Preferably, terminating the unloading task may comprise sending a report from the autonomous vehicle to a commanding software system identifying the reason for terminating the unloading task.

Optionally, the scanning device is moved by an actuator on the vehicle to a position above or below the load so that a line of sight is provided between the scanning device and the unload location.

Two light based scanning devices may be used to perform the scan, which is advantageous for wide loads and/or wide unload locations.

### Brief Description of the Drawings

The invention will be further illustrated by the following description of embodiments thereof, given by way of example only with reference to the accompanying drawings, in which:
Fig. 1 shows operation of a laser scanning device in accordance with the present teachings;
Fig. 2 shows another view of the laser scanning device in operation;
Fig. 3 shows the different properties of a load that the laser scanning device in accordance with the present teachings can measure;
Fig. 4 shows another view of the load properties that the laser scanning device in accordance with the present teachings can measure;
Fig. 5 shows a further view of the load properties that the laser scanning device in accordance with the present teachings can measure;
Fig. 6 shows a view of the load properties that the laser scanning device in accordance with the present teachings can measure before setting down a load;
Fig. 7 shows another view of the load properties that the laser scanning device in accordance with the present teachings can measure before setting down a load;
Fig. 8 shows an alternative configuration for the light based scanning device shown in Fig. 1; and
Fig. 9 shows another alternative configuration for the light based scanning device shown in Fig. 1.

### Detailed Description

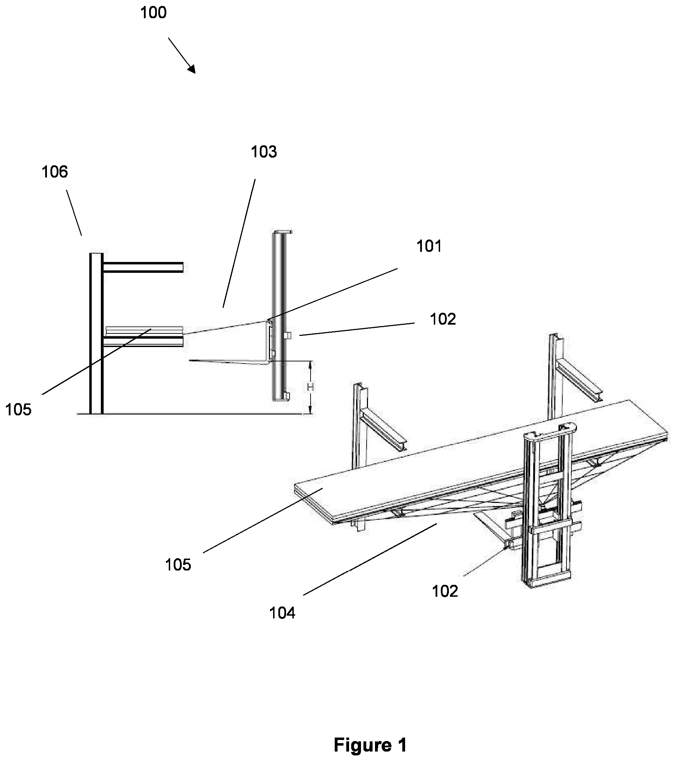

In Fig. 1 there is indicated, generally at 100, a light based scanning device 101 mounted to a forklift carriage 102 so that it can rise with the carriage 102 to all points. As is known in the art the carriage 102 is a transverse structure on which forks are mounted providing mechanical structure between the forks and the forklift mast. In the exemplary embodiment the light based scanning device 101 is a laser device which may use a single beam (2D) 103 or may use multiple planes of beams (3D) 104 to scan a load 105. The person skilled in the art will appreciate that any suitable scanning device may be used, such as a 3D depth camera, and the present teachings are not limited to laser scanning. The load 105 is being held in a rack 106. The light based scanning device 101 maintains the same position and orientation relative to the forks of the forklift at all heights. The light based scanning device 101 may be mounted in any suitable position chosen by the person skilled in the art. For example, underneath the forks or above the forklift carriage 102 or below the top of the forklift carriage but above the forks. The scanning device can oriented in any suitable as chosen by the person skilled in the art. In some configurations this can be a negative tilt angle but the present teaching are not limited to this. The scanning device may be configured to scan a plane which is parallel to the ground. These configurations can be application dependant. The scanning device 101 is moved by the forklift through a range of motions such that a laser or light beam(s) 103 strikes areas of interest for the handling of a load 105, especially on long loads, in a warehouse or production environment. Optionally the scanning device can be extended or retracted to provide protection when not in use and to provide a field of view below the forks while still allowing the forks to touch the floor.

Range data from the light based scan is collected along with motion data from the forklift sensors (e.g. lift height, reach value, carriage tilt, deck tilt) by a suitable on-board data gathering device (computer, PLC, microcontroller). This data is processed into a 3D point cloud (e.g., an array of 3D coordinates for each laser beam point). A processor on-board the forklift (or optionally remotely) processes the point cloud data. The data is first prefiltered to remove unnecessary data to ensure a rapid execution of the load assessment. The desired load properties are determined by further processing of this data.

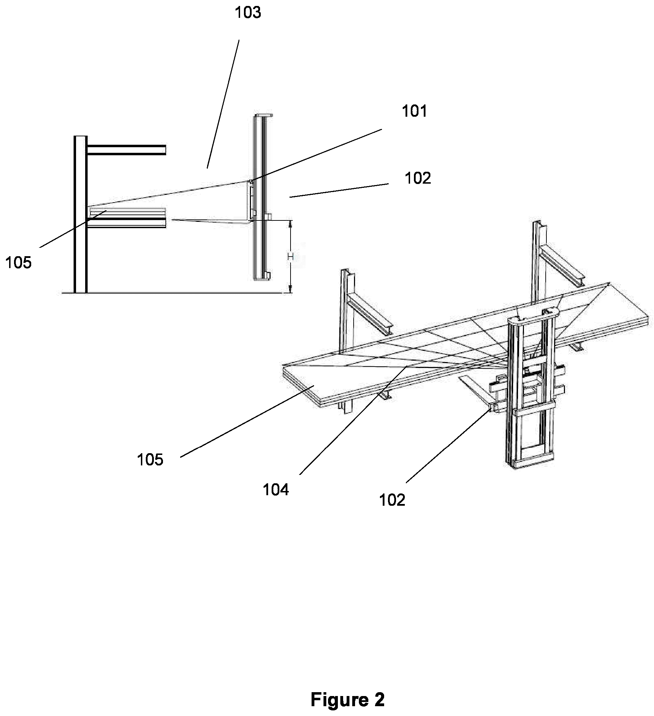

Referring again to Fig. 1, the carriage 102 is lifted to a height H where the data acquisition (load scan) will begin. With reference to Fig. 2, scan data is acquired over the load volume by increasing the value of H. The laser or light beam 103 is scanned over the racking space as predefined for this location. All of the load scan data along with the corresponding H values are available in the system memory upon completion of the scan data acquisition phase. This data can then be manipulated or processed to determine the load properties as explained in more detail hereinafter.

An exemplary data acquisition procedure may include the following steps:
Step one: Vehicle receives a task from a commanding software system such as a higher level fleet management, warehouse management or GUI software. The task contains the 3D location and 3D size of the load to be collected.
Step two: Vehicle arrives at the load location and lifts to just below location height (H) and load scan begins (as shown in Fig. 1).
Step three: Length and height data is acquired while lifting the carriage through a target height range; the scan stops at a predetermined height about the load height (as shown in Fig. 2). This raw data is saved for analysis, record keeping and processing.
Step four: The data is next processed into a Cartesian 3D point cloud.
Step five: The data is trimmed to remove points outside a defined regions of interest (target volume + additional margin).

With regard to step three above, the person skilled in the art should appreciate the scanning device can be provided with a dedicated actuator while holding the fork carriage at a constant height i.e., the forks arrive at load height and stop. The dedicated actuator performs the scanning motion - it may be faster than using vehicle hydraulics. A suitable linear displacement sensor will enable the height change to be tracked.

After acquisition of the data as outlined in steps one to five above the data is further processed. This processing determines several key properties of the load. That is, the following properties can be determined from the dataset when it is converted to a 3D point cloud:
A. The lift-off clearance available above the load and below the next level of racking
B .The presence or absence of the load face, and if present, the distance to the load face.
C. The presence or absence of a predetermined left side and right side clearance between the desired load and the neighbouring load(s).

While some state of the art references can assess clearances above a load, they cannot handle assessment of left and right side clearances of long loads having varied lengths. In the present teachings, predefined tolerances and system settings are stored in a system parameter file which can be adjusted by technicians.
1. The system for autonomous vehicle adapts to the length of the load.
   a. The length of the proposed load to be lifted is sent to the system during the task creation.
2. The system checks to the left and to the right of the load edge, which includes the following:
   a. The system checks that the load length does not exceed the provided value for the proposed load which would indicate a mismatch between the task data.
   b. The system checks that the load itself is not shifted significantly left or right (a defined tolerance for this is defined in system parameters).
   c. The system checks that the load is not touching its neighbouring loads in a racking system. This is done by checking for an unoccupied space to the left or right of the proposed load. The dimensions of the free space required are defined in system parameters.
3. If the measured load length is longer than the provided length, is shifted left or right or touching (or too close to) its neighbouring loads, the lift is blocked from proceeding. Otherwise, the lift is allowed to proceed.

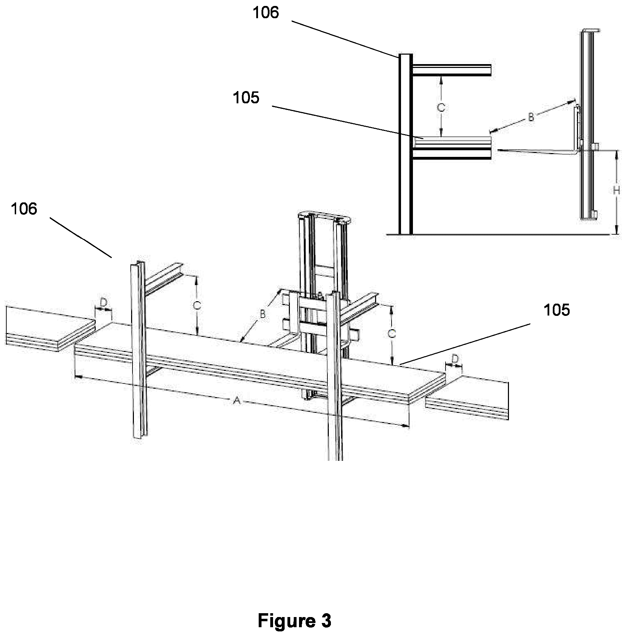

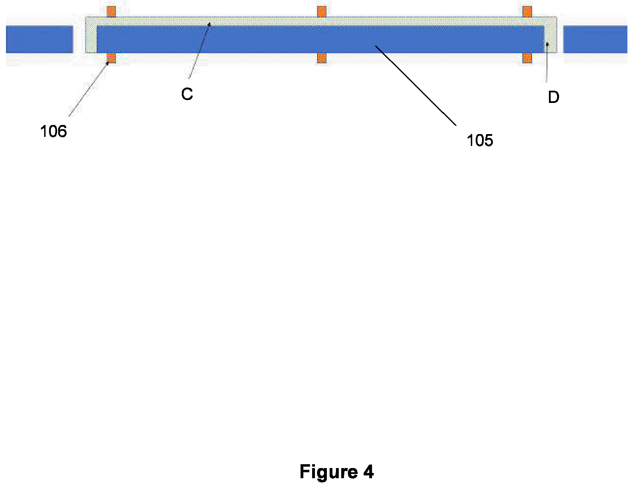

Figs. 3 and 4 shows the measurement of load clearance C above the load as well as the clearance left and right of the load D and the load length A.

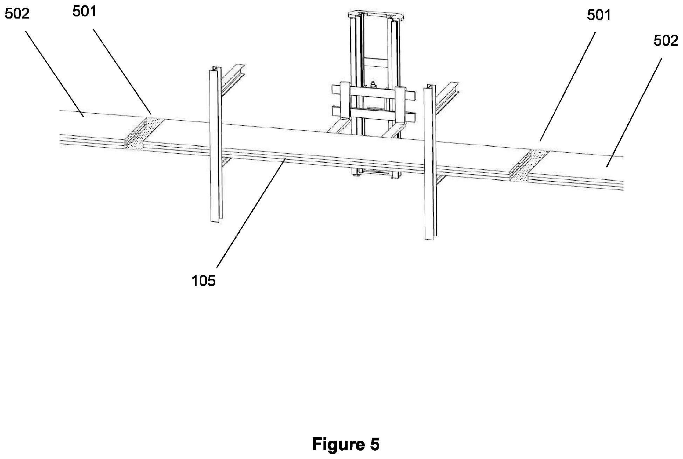

With reference to Fig. 5 this shows that volumetric clearance 501 left and right of load (perpendicular to the autonomous forklift) is checked. If the volumetric clearance between the load 105 to be lifted and a neighbouring load 502 is not less than a predetermined threshold then the system will abort the lifting of the load 105.

While the present teachings are primarily directed to determining clearance left and right of a load, the system can carry out further checks or measure further properties of the load as outlined below.

An exemplary procedure may include one or more of the following steps:
Step one: Calculate the number of points present in the load volume to confirm the rack space is occupied (load exists at the location).
Step two: Evaluate the number of points in the 3D volume representing the acceptable location of the load face (this confirms that the anticipated load face is present).
Step three: Determine occupancy of predetermined volumes to the left and right of the load. These must be unoccupied if the load length and position on the rack is within a predetermined tolerance.
Step four: Determine occupancy of predetermined volumes to the above and below the load. These must be unoccupied to safely insert the forks under the load and also to safely lift the load. Step five: If the following conditions are true then lifting of the load can take place - rack occupied, load face within tolerance, load edges left and right within tolerance, under and over load clearance within tolerance.
Step six: If the aforementioned conditions are not met then lifting of the load is aborted and the reason for lift failure is recorded and reported by the system to a commanding software system (a higher level fleet/warehouse controller).

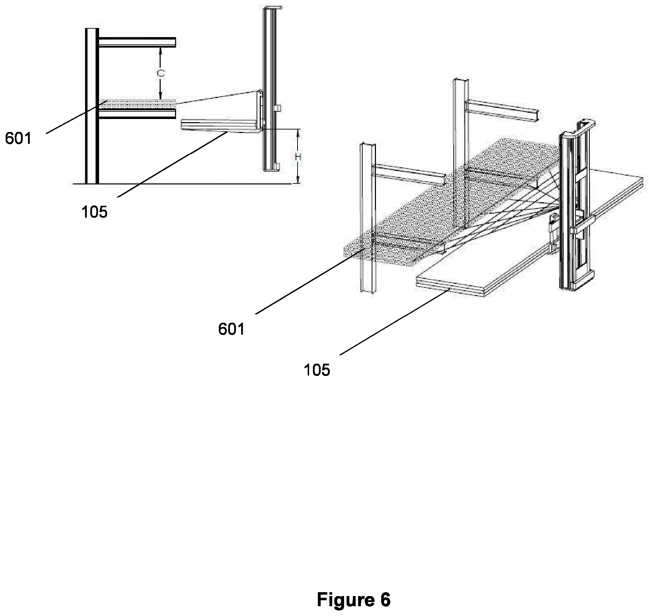

With reference to Fig.6 it can be seen that the system in accordance with the present teachings is also capable of performing a scan of a racking location 601 during the offloading of a carried load 105. This scan of the racking is to ensure that the volume of the load 105 plus tolerances is available on the racking location 601. This is used to prevent the unloading of the forklift if the required volume is not present at the location.

In order to perform the scanning of a racking location or unload location a vehicle (with a load thereon) approaches the unload location and stops a predetermined distance from the unload location. The requested unload location is scanned using a light based scanning device as previously described. This is to verify that the required volume for the load plus defined tolerances are available at the unload location. If the required volume is not present (e.g. an obstacle or another load is present) the unload process is aborted. A report is provided to the central system (such as warehouse management software) which includes the reason for aborting the unload process.

In order the carry out the unload scan (scan of the unload location) it may be necessary to move the scanning device by means of an actuator so that it can see either under or over the carried load on the forklift i.e., so that a line of sight can be provided under or over the carried load. In one embodiment the scanner is provided below the carried load and deployed using a linear actuator. Other actuator configurations can be used as appropriate by the person skilled in the art depending of the shape of the load generally being loaded and unloaded.

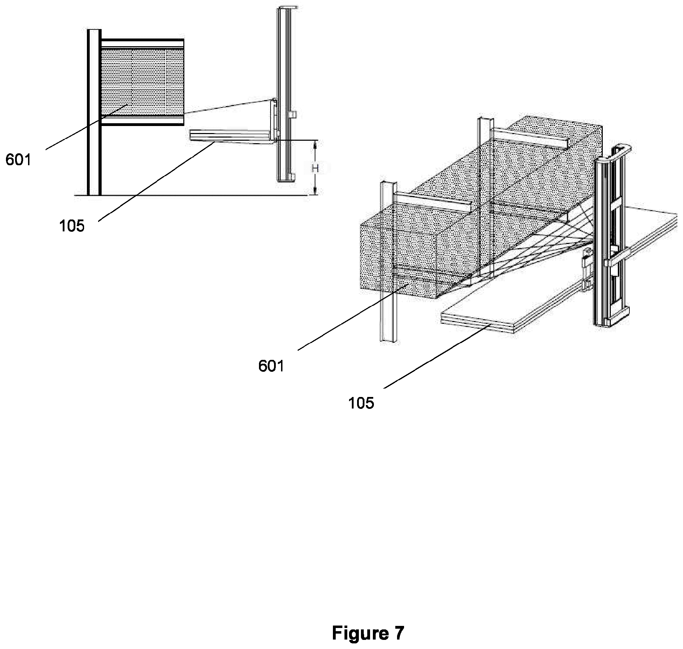

It can be see with reference to Fig. 7 that the size of the load volume 601 can be changed arbitrarily within the scanning device range capabilities to adjust to different size loads 105 and racking locations.

That is, the autonomous vehicle system in accordance with the present teachings is also capable of determining load properties if performing a load set down:
- The load volume plus tolerances is available and is unobstructed.
- The volume above the racking required during set down is available and unobstructed.

The system of the present teachings can also determine whether the autonomous vehicle (forklift) is loaded or unloaded. This can be made using a dedicated sensor or it may be done using the light based scanning device described herein.

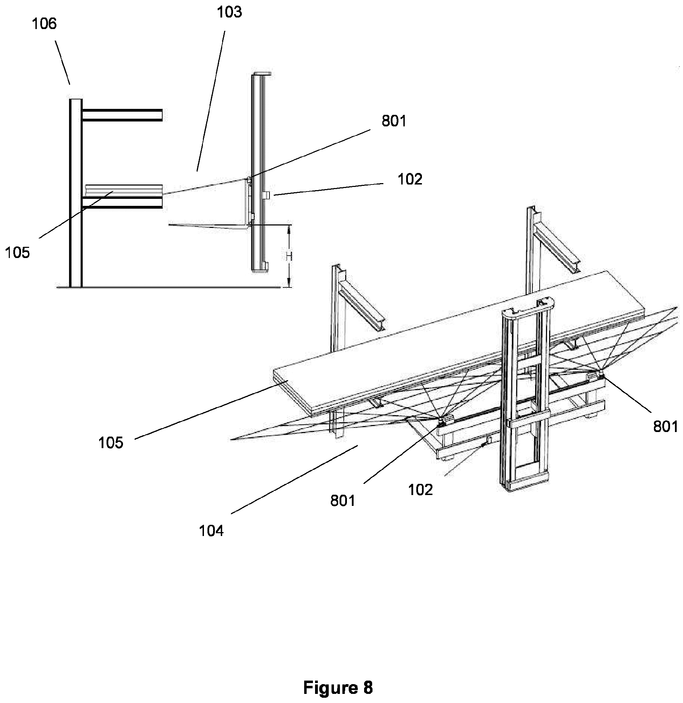

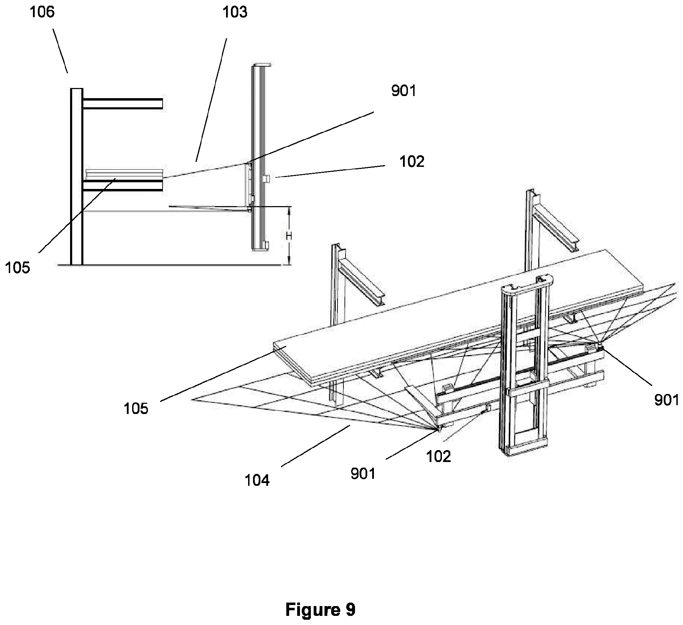

Turning to Fig. 8 this shows an alternative configuration to that shown in Fig. 1. In Fig. 8, two light based scanning devices 801 (e.g., laser scanners) are mounted on the forklift carriage 102. In Fig. 8 both light based scanning devices 801 are mounted on top of the forklift carriage 102 at either end of the carriage 102. However, the scanning devices can positioned at any suitable location on the carriage. For example, Fig. 9 shows one scanning device 901 on top of the carriage 102 and one scanning device 901 below the carriage.

More than two scanning devices could be used and the mounting locations could vary. For longer loads a superior dataset could be acquired by mounting two scanning devices at the ends of the fork carriage (e.g., c4m distance between the sensors). The data from each scanning device is merged into a single point cloud and the evaluation would continue as outlined above. This arrangement provides improved resolution at the load ends and better depth of view into the unoccupied volume between loads.

It should also be appreciated that the system in accordance with the present teachings can be used on manually operated forklifts as an advanced load detection and driver assistance system. The system can also be used on autonomous or optionally autonomous machines where an autopilot computer uses the load scan results to determine if and how the load can be lifted or lowered onto a warehouse rack or other similar material holding structure.

While the present teachings have been described mainly with respect to use of laser scanners it should be appreciated that this in only one possible type of canner that can be used for the data acquisition phase (or the LIDAR phase, Light Detection and Ranging). Some alternative scanning devices include a time of flight camera, a stereo vision camera arrangement, and structured light imaging techniques. In all these cases a 3D point cloud would be created and the data processed in a similar manner as outlined above.

The invention is not limited to the embodiments described which can be modified without departing from the scope of the claimed invention. The invention may also be defined by the following clauses:
1. A method for an autonomous vehicle to scan a load at a location comprising:
   receiving a lifting task including the location of the load on a racking system;
   scanning a predefined space at the location with a light based scanning device mounted on the autonomous vehicle;
   processing data acquired from the scan to determine a clearance distance between each end of the load, perpendicular to the autonomous vehicle, and a neighbouring load in the racking system; and
   terminating the lifting task if it is determined that the clearance distance is less than a predetermined clearance distance.
2. The method of clause 1 wherein receiving the lifting task includes receiving the predetermined clearance distance for the load.
3. The method of clause 1 or 2 further comprising processing the data to determine the length of the load and terminating the lifting task if it is determined that the length exceeds a predetermined maximum length.
4. The method of clause 3 wherein receiving the lifting task includes receiving the predetermined maximum length for the load.
5. The method of any one of clauses 1 to 4 further comprising processing the data acquired from the scan to determine the unoccupied volumetric space between each end of the load, perpendicular to the autonomous vehicle, and a neighbouring load in the racking system.
6. The method of clause 5 further comprising terminating the lifting task if it is determined that the unoccupied volumetric space is less than a predetermined unoccupied volumetric space.
7. The method of any one of clauses 1 to 6 further comprising processing the data acquired from the scan to determine a clearance available above the load.
8. The method of any one of clauses 1 to 7 further comprising processing the data acquired from the scan to determine a clearance available below the load.
9. The method of clause 7 or 8 further comprising terminating the lifting task if it is determined that the clearance is less than a predetermined clearance.
10. The method of any one of clauses 1 to 9 wherein termination the lifting task comprises sending a report from the autonomous vehicle to a commanding software system identifying the reason for terminating the lifting task.
11. The method of any one of clauses 1 to 10, further comprising processing the data acquired from the scan to determine the presence or absence of a load at the location.
12. The method of any one of clauses 1 to 11, further comprising processing the data acquired from the scan to determine the presence or absence of a load face, and if present, the distance to the load face.
13. The method of any one of clauses 1 to 12 further comprising scanning the predefined space at the location with two light based scanning devices mounted on the autonomous vehicle and combining data acquired from each two light based scanning device.
14. A system for scanning a load at a location comprising a commanding software system and an autonomous vehicle:
   the commanding software system configured to send a lifting task including the location of the load on a racking system to the autonomous vehicle;
   the autonomous vehicle configured to:
      scan a predefined space at the location with a light based scanning device mounted on the autonomous vehicle;
      processes data acquired from the scan to determine a clearance distance between each end of the load, perpendicular to the autonomous vehicle, and a neighbouring load in the racking system; and
      terminate the lifting task if it is determined that the clearance distance is less than a predetermined clearance distance.
14. The system of clause 13 wherein the autonomous vehicle is further configured to send a report from the autonomous vehicle to the commanding software system identifying the reason for terminating the lifting task
15. The system of clause 13 or 14 wherein the commanding software system is further configured to provide the predetermined clearance distance in the lifting task sent to the autonomous vehicle.
16. The system of any one of clauses 13 to 15 wherein two light based scanning devices are mounted on the autonomous vehicle to scan the predefined space.
17. An autonomous vehicle configured to perform the method of any one of clauses 1 to 12.

## Claims

1. A method for an autonomous vehicle (100) to scan an unload location (601) while carrying a load (105), the method comprising:
receiving an unloading task including the unload location on a racking system;
scanning a predefined space at the unload location with a light-based scanning device (101) mounted on the autonomous vehicle;
processing data acquired from the scan to determine whether a required volume to unload the load is available at the unload location, wherein the required volume includes the volume of the load (105) and predefined clearances around the load; and
terminating the unloading task if it is determined that the available volume is less than the required volume;
**characterized in that**:
processing the data comprises determining the unoccupied volumetric space available at the unload location.

2. The method of claim 1, wherein the required volume is defined for the unloading task based on task data corresponding to the size of the load (105) and predefined clearances around the load.

3. The method of claim 1 or 2, wherein the light-based scanning device (101) is mounted on an actuator configured to move the scanning device to a position below the carried load (105) and/or above the carried load so as to provide a line of sight between the scanning device and the unload location (601) prior to scanning the predefined space.

4. The method of any one of claims 1 to 3, wherein processing the data comprises generating a three-dimensional point cloud from range data acquired during scanning and computing the unoccupied volumetric space from the point cloud within a predefined unload-location volume (601).

5. The method of any one of claims 1 to 4, wherein scanning the predefined space at the unload location comprises scanning with two light-based scanning devices mounted on the autonomous vehicle (100) and combining data acquired from the two scanning devices into a single point cloud prior to computing the unoccupied volumetric space.

6. The method of any one of claims 1 to 5, wherein the predefined space at the unload location is defined by a virtual unload volume envelope (601) whose dimensions are dynamically adjusted within the range capabilities of the scanning device to match the task data corresponding to the size of the carried load (105).

7. The method of any one of claims 1 to 6, further comprising, upon termination of the unloading task, sending from the autonomous vehicle (100) to a commanding software system a report including a reason comprising an indication of at least one of: insufficient left-side or right-side clearance caused by a neighbouring load, insufficient vertical clearance, and presence of an obstacle in the unload location (601).

8. The method of any one of claims 1 to 7, further comprising determining, prior to scanning, whether the autonomous vehicle (100) is carrying a load (105) based on at least one of a dedicated load sensor and analysis of data from the light-based scanning device (101), and performing the unload-location scan only when a carried load is detected.

9. A system for scanning an unload location (601) on a racking system before setting down a load (105), comprising an autonomous vehicle (100) and a commanding software system, wherein,
the commanding software system is configured to send unloading tasks including an unload location on the racking system to the autonomous vehicle; and
the autonomous vehicle comprises a light-based scanning device (101) mounted on the vehicle and a controller configured to scan a predefined space at the unload location with the light-based scanning device and to process data acquired from the scan to determine whether a required volume to unload the load is available at the unload location, the required volume including the volume of the load and predefined clearances around the load, and to terminate the unloading task if it is determined that the available volume is less than the required volume;
**characterized in that**:
the controller is configured to process the data to determine an unoccupied volumetric space available at the unload location.

10. The system of claim 9, wherein the required volume is defined for each unloading task based on task data corresponding to the size of the load (105) and predefined clearances around the load.

11. The system of claims 9 or 10, wherein the autonomous vehicle (100) comprises an actuator configured to move the light-based scanning device (101) between a stowed position and a deployed position below or above the carried load (105) to obtain the line of sight to the unload location (601).

12. The system of any one of claims 9 to 11, wherein the controller is configured to generate and transmit to the commanding software system a report including a failure reason when the unoccupied volumetric space is determined to be less than the required volume, the failure reason comprising an indication of at least one of: insufficient left-side or right-side clearance caused by a neighbouring load, insufficient vertical clearance, and presence of an existing load or obstacle in the unload location (601).

13. The system of any one of claims 9 to 12, wherein the light-based scanning device (101) comprises a laser scanner configured to generate range data for the predefined space at the unload location, the controller being configured to construct a three-dimensional point cloud from the range data and to compute the unoccupied volumetric space from the point cloud.

14. The system of any one of claims 9 to 13, wherein the autonomous vehicle (100) comprises two light-based scanning devices mounted at opposite ends of a forklift carriage (102), and the controller is configured to merge scan data from the two light-based scanning devices to improve resolution at ends of the load (105) and depth of view into unoccupied volume between loads.

15. The system of any one of claims 9 to 14, wherein the commanding software system is further configured to define, for each unloading task, tolerance values for side clearance and vertical clearance and to include the tolerance values in the required volume, and the controller is configured to compare measured clearances at the unload location (601) with the tolerance values when determining whether the unoccupied volumetric space is sufficient.
